# EUROPEAN PATENT APPLICATION

(11) **EP 4 674 524 A1**
(43) Date of publication of application: **07.01.2026**
(21) Application number: 24185903.2
(22) Date of filing: 02.07.2024
(51) Int. Cl.: B01J 19/00, B01J 19/18, B01J 19/24

(54) **PROCESSES FOR PRODUCING POLYMER POLYOLS**

(71) Applicant: Covestro LLC, Pittsburgh, PA 15205 (US); Covestro Deutschland AG, 51373 Leverkusen (DE)
(72) Inventor: SHREWSBURY, Logan, Charleston, 25313 (US); BROWNE, Edward, 50672 Köln (DE)
(74) Representative: Levpat

(57) **Abstract**

Processes for continuously producing a polymer polyol ("PMPO"). The process includes free-radically polymerizing an ethylenically unsaturated monomer composition in the presence of a base polyol, in which the polymerizing occurs in a continuous stirred tank reactor ("CSTR") that has an external recirculation loop comprising a pump and a heat exchanger arranged in series with respect to each other. A stream of the reactor contents is (i) continuously removed from the reactor, (ii) then continuously flows through the pump and the heat exchanger, and (iv) then continuously returns to the CSTR. A ratio of reactor system residence time to recirculation loop residence time is 10 to 93.

## Description

### FIELD

This specification pertains to processes for producing polymer polyols ("PMPOs"). The processes of this specification can allow for longer PMPO production campaigns before the production needs to be interrupted for cleaning of the production unit.

### BACKGROUND

PMPOs are dispersions of polymer particles in a polyol that is often referred to as a base polyol. PMPOs are used to prepare polyurethane foams, such as slabstock and molded flexible polyurethane foams. Slabstock flexible polyurethane foams are often used in carpet, furniture and bedding applications, while molded flexible polyurethane foams are often used in automotive applications. To produce the flexible polyurethane foam, the PMPO is reacted with a polyisocyanate in the presence of a blowing agent and other ingredients, such as a tertiary amine catalyst. PMPOs can often produce foams with higher hardness levels than a conventional, unmodified, polyol can produce.

PMPOs are sometimes produced continuously using a continuous stirred tank reactor that has an external recirculation loop. The reactor contents are recirculated through the recirculation loop, which includes a heat exchanger, often a shell and tube heat exchanger, to remove the heat of reaction by passing reactor contents through the tube side of the heat exchanger and passing a coolant liquid, such as cooling water, through the shell side of the heat exchanger. Over time, fouling occurs in the heat exchanger tubes, which reduces heat exchanger efficiency and renders the heat exchanger incapable of removing sufficient heat from the reactor contents to maintain a desired temperature in the reactor. As a result, production needs to be stopped in order to clean the system, which reduces the production capacity of the unit.

As a result, it would be desirable to provide methods for producing PMPOs in which heat exchanger fouling is reduced, thereby enabling longer production campaigns and, as a result, increasing a PMPO production unit's production capacity.

### SUMMARY

This specification pertains to processes for continuously producing a PMPO comprising free-radically polymerizing an ethylenically unsaturated monomer composition in the presence of a base polyol. In these processes, the polymerizing occurs in a continuous stirred tank reactor ("CSTR") that has an external recirculation loop comprising a pump and a heat exchanger arranged in series with respect to each other, in which a stream of the reactor contents is (i) continuously removed from the reactor, (ii) then continuously flows through the pump and the heat exchanger, and (iii) then continuously returns to the CSTR, and a ratio of reactor system residence time to recirculation loop residence time is 10 to 93 in which: (A) reactor system residence time = (Rᵥ + Lᵥ) / Rₜₕᵣᵤ; and (B) recirculation loop residence time = (Rᵥ + Lᵥ) / Lₚ, in which: (1) Rᵥ is the volume, in cubic meters, of the continuous stirred tank reactor; (2) Lᵥ is the volume, in cubic meters, of the recirculation loop; (3) Rₜₕᵣᵤ is the reactor volumetric throughput in cubic meter per hour; and (4) Lₚ is the volumetric flow rate of reactor contents through the recirculation loop in cubic meters per hour.

### BRIEF DESCRIPTION OF THE DRAWING

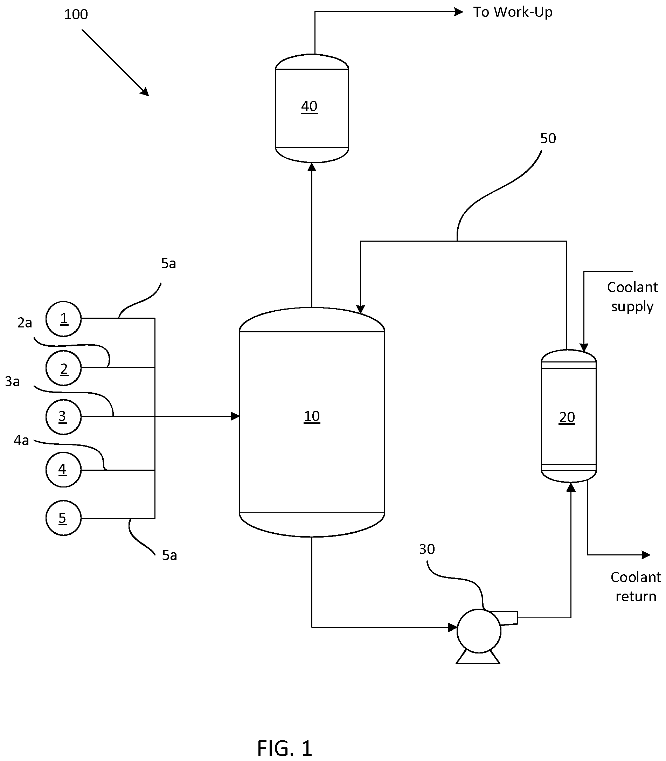

FIG. 1 schematically illustrates a system suitable for carrying out the processes according certain non-limiting embodiments of the processes described in this specification.

### DETAILED DESCRIPTION

Various embodiments are described and illustrated in this specification to provide an overall understanding of the structure, function, properties, and use of the disclosed inventions. It is understood that the various embodiments described and illustrated in this specification are non-limiting and non-exhaustive. Thus, the invention is not limited by the description of the various non-limiting and non-exhaustive embodiments disclosed in this specification. The features and characteristics described in connection with various embodiments may be combined with the features and characteristics of other embodiments. Such modifications and variations are intended to be included within the scope of this specification. As such, the claims may be amended to recite any features or characteristics expressly or inherently described in, or otherwise expressly or inherently supported by, this specification. Further, Applicant reserves the right to amend the claims to affirmatively disclaim features or characteristics that may be present in the prior art. Therefore, any such amendments comply with the requirements of 35 U.S.C. § 112 and 35 U.S.C. § 132(a). The various embodiments disclosed and described in this specification can comprise, consist of, or consist essentially of the features and characteristics as variously described herein.

Any patent, publication, or other disclosure material identified herein is incorporated by reference into this specification in its entirety unless otherwise indicated, but only to the extent that the incorporated material does not conflict with existing definitions, statements, or other disclosure material expressly set forth in this specification. As such, and to the extent necessary, the express disclosure as set forth in this specification supersedes any conflicting material incorporated by reference herein. Any material, or portion thereof, that is said to be incorporated by reference into this specification, but which conflicts with existing definitions, statements, or other disclosure material set forth herein, is only incorporated to the extent that no conflict arises between that incorporated material and the existing disclosure material. Applicant(s) reserves the right to amend this specification to expressly recite any subject matter, or portion thereof, incorporated by reference herein.

In this specification, unless otherwise expressly indicated, all numerical parameters are to be understood as being prefaced and modified in all instances by the term "about", in which the numerical parameters possess the inherent variability characteristic of the underlying measurement technique used to determine the numerical value of the parameter. Examples of such numerical parameters include, but are not limited to, hydroxyl numbers, equivalent weights, molecular weights, functionalities, amounts, and percentages. At the very least, but without limiting the application of the doctrine of equivalents to the claims, each numerical parameter described in this specification should at least be construed in light of the number of reported significant digits and by applying ordinary rounding techniques.

Also, any numerical range recited in this specification is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited in this specification is intended to include all lower numerical limitations subsumed therein and any minimum numerical limitation recited in this specification is intended to include all higher numerical limitations subsumed therein. Accordingly, Applicant(s) reserves the right to amend this specification, including the claims, to expressly recite any sub-range subsumed within the ranges expressly recited herein. All such ranges are intended to be inherently described in this specification such that amending to expressly recite any such sub-ranges would comply with the requirements of 35 U.S.C. § 112 and 35 U.S.C. § 132(a).

The grammatical articles "one", "a", "an", and "the", as used in this specification, are intended to include "at least one" or "one or more", unless otherwise indicated. Thus, the articles are used in this specification to refer to one or more than one (i.e., to "at least one") of the grammatical objects of the article. By way of example, "a component" means one or more components, and thus, possibly, more than one component is contemplated and may be employed or used in an implementation of the described embodiments. Further, the use of a singular noun includes the plural, and the use of a plural noun includes the singular, unless the context of the usage requires otherwise.

As used herein, "hydroxyl number" (which may also be referred to as "OH number") refers to a hydroxyl number determined according to ASTM D4274-11 and are provided in units of mg [KOH]/g [polyol]. Further, any viscosity values reported herein are as determined using an Anton-Paar SVM 3000 viscometer at 25°C that has been demonstrated to give equivalent results as can be generated with ASTM-D4878-15, in which the instrument is calibrated using mineral oil reference standards of known viscosity.

As used herein, number average molecular weights ("Mn") and weight average molecular weight ("Mw"), are Mn and Mw value determined by gel-permeation chromatography ("GPC") using a method based on DIN 55672-1, employing chloroform as the eluent with a mixed bed column (Agilent PL Gel; SDVB; 3 micron Pore diameter: 1xMixed-E + 5 micron Pore diameter: 2xMixed-D), refractive index ("RI") detection and calibrated with polyethylene glycol as the standard.

As used herein, "monomer" means the simple unpolymerized form of a chemical compound having relatively low molecular weight, e.g., acrylonitrile, styrene, methyl methacrylate, and the like.

As used herein, "polymerizable ethylenically unsaturated compound" means a compound containing ethylenic unsaturation (C=C, i.e., two double bonded carbon atoms) that is capable of undergoing free radically induced addition polymerization reactions.

As used herein, "pre-formed stabilizer" means an intermediate obtained by reacting a macromer containing reactive unsaturation (e.g. acrylate, methacrylate, maleate, etc.) with one or more monomers (i.e. acrylonitrile, styrene, methyl methacrylate, etc.), with and at least one free radical initiator, in the presence of a polymer control agent (PCA) and, optionally, in a diluent, to give a copolymer (i.e. a dispersion having e.g. a low solids content (e.g. <30%), or soluble grafts, etc.).

As used herein "viscosity" is in millipascal-seconds (mPas) measured at 25°C on an Anton Paar SVM3000 viscometer.

As indicated earlier, aspects of this specification relate to processes for producing a PMPO. As used herein, the term "polymer polyol" or "PMPO" refers to dispersions of polymer particles in a polyol (in which the polyol is sometimes referred to as a "base" polyol). In some embodiments, the PMPOs have a solids content, i.e., content of polymer particles, of 30% by weight to 75% by weight, such as 35% by weight to 70% by weight, 40% by weight to 60% by weight, or 41% by weight to 55% by weight, based on the total weight of the PMPO. Moreover, in some implementations, the PMPO has a viscosity at 25°C (as defined above) of less than 10,000 mPas and, in some cases, less than 5,000 mPas.

The processes will now be described with reference to Fig. 1. Fig. 1 illustrates a suitable, but non-limiting, system **100** for carrying out processes of this specification. As shown, system **100** illustrated in Fig. 1 includes CSTR **10.** An inlet of CSTR **10** is configured to continuously receive a reaction mixture containing various components suitable for producing a PMPO in CSTR **10.** As is shown, in this particular implementation, the inlet is in fluid communication with (i) a source of free radical initiator **1** via line **1a,** (ii) a source of preformed stabilizer **2** via line **2a,** (iii) sources of ethylenically unsaturated monomers **3** and **4,** via lines **3a** and **4a*,*** and (iv) a source of base polyol **5*,*** via line **5a*.***

Suitable base polyols **5** include, for example, polyether polyols having a functionality of 2 to 8, such as 2 to 6 or 3 to 5, and an OH number of 20 to 400 mg KOH/g, 20 to 200 mg KOH/g, 20 to 150 mg KOH/g, 20 to 100 mg KOH/g, or, in some cases, 20 to 50 mg KOH/g, 25 to 60 mg KOH/g, or 30 to 55 mg KOH/g.

Specific examples of suitable base polyols 5 include polyoxyethylene glycols, polyoxyethylene triols, polyoxyethylene tetrols and higher functionality polyoxyethylene polyols, polyoxypropylene glycols, polyoxypropylene triols, polyoxypropylene tetrols and higher functionality polypropylene polyols, mixtures thereof. When mixtures are used, the ethylene oxide and propylene oxide may be added simultaneously or sequentially to provide internal blocks, terminal blocks or random distribution of the oxyethylene groups and/or oxypropylene groups in the polyether polyol. Suitable starters or initiators for these compounds include, for example, ethylene glycol, propylene glycol, diethylene glycol, dipropylene glycol, tripropylene glycol, trimethylol-propane, glycerol, pentaerythritol, sorbitol, sucrose, ethylenediamine, toluene diamine, etc. The alkoxylation reaction may be catalyzed using any conventional catalyst including, for example, potassium hydroxide (KOH) or a double metal cyanide (DMC) catalyst.

Other suitable base polyols **5** include alkylene oxide adducts of non-reducing sugars and sugar derivatives, alkylene oxide adducts of phosphorus and polyphosphorus acids, alkylene oxide adducts of polyphenols, polyols prepared from natural oils such as, for example, castor oil, etc., and alkylene oxide adducts of polyhydroxyalkanes other than those described above.

Illustrative alkylene oxide adducts of polyhydroxyalkanes include, for example, alkylene oxide adducts of 1,3-dihydroxypropane, 1,3-dihydroxybutane, 1,4-dihydroxybutane, 1,4-, 1,5- and 1,6-dihydroxyhexane, 1,2-, 1,3-, 1,4-1,6- and 1,8-dihydroxyoctant, 1,10-dihydroxydecane, glycerol, 1,2,4-tirhydroxybutane, 1,2,6-trihydroxyhexane, 1,1,1-trimethyl-olethane, 1,1,1-trimethylolpropane, pentaerythritol, caprolactone, polycaprolactone, xylitol, arabitol, sorbitol, mannitol, and the like.

Other base polyols **5** which can be employed include the alkylene oxide adducts of non-reducing sugars, wherein the alkoxides have from 2 to 4 carbon atoms. Non-reducing sugars and sugar derivatives include sucrose, alkyl glycosides such as methyl glycoside and ethyl glucoside, glycol glucosides, such as ethylene glycol glycoside, propylene glycol glucoside, glycerol glucoside, and 1,2,6-hexanetriol glucoside, as well as alkylene oxide adducts of the alkyl glycosides.

The alkylene oxide adducts of phosphorus and polyphosphorus acid are also suitable base polyols 5. These include ethylene oxide, 1,2-epoxy-propane, the epoxybutanes, 3-chloro-1,2-epoxypropane as alkylene oxides. Phosphoric acid, phosphorus acid, polyphosphoric acids, such as tripolyphosphoric acid, and the polymetaphosphoric acids are suitable for use herein.

Of course, blends or mixtures of various useful polyols may be used if desired.

Suitable ethylenically unsaturated monomers **3*,* 4** include, for example, aliphatic conjugated dienes, such as butadiene and isoprene, monovinylidene aromatic monomers, such as styrene, α-methyl-styrene, (t-butyl)styrene, chlorostyrene, cyanostyrene and bromostyrene; α,β-ethylenically unsaturated carboxylic acids and esters thereof, such as acrylic acid, methacrylic acid, methyl methacrylate, ethyl acrylate, 2-hydroxyethyl acrylate, butyl actylate, itaconic acid, and maleic anhydride, α,β-ethylenically unsaturated nitriles and amides, such as acrylonitrile, methacrylonitrile, acrylamide, methacrylamide, N,N-dimethyl acrylamide, and N-(dimethylaminomethyl)-acrylamide, vinyl esters, such as vinyl acetate, vinyl ethers, vinyl ketones, and vinyl and vinylidene halides, among others. Of course, mixtures of two or more of the aforementioned monomers are also suitable. In some embodiments, the ethylenically unsaturated monomer **3, 4** comprises at least one of styrene and its derivatives, acrylonitrile, methyl acrylate, methyl methacrylate, and vinylidene chloride, including mixtures of any two or more thereof.

In some embodiments, the ethylenically unsaturated monomer comprises styrene **3** and acrylonitrile **4.** More specifically, in some implementations, styrene **3** and acrylonitrile **4** are used in sufficient amounts such that the weight ratio of styrene to acrylonitrile (S:AN) is within the range of 90: 10 to 10:90, such as 80:20 to 20:80 or 75:25 to 25:75.

Suitable preformed stabilizers **2** include, for example, a reaction product of a reaction mixture comprising: (a) a macromer that contains reactive unsaturation; (b) an ethylenically unsaturated monomer; (c) a free radical initiator; (d) a polymer control agent; and, optionally, (e) a diluent.

Suitable macromers include a reaction product of a reaction mixture comprising: (i) a starter compound having a functionality of 2 to 8, and a hydroxyl number of 20 to 50; (ii) 0.1 to 3% by weight, based on 100% by weight of the sum of components (i), (ii) and (iii), of a hydroxyl-reactive compound that contains reactive unsaturation; and (iii) from 0 to 30% by weight, based on 100% by weight of the sum of components (i), (ii) and (iii), of a diisocyanate. Specific examples of suitable macromers, as well as methods for their preparation, are described in United States Patent Application Publication No. US 2017/0306076 A1 at [0103]-[0116], the cited portion of which being incorporated herein by reference.

Suitable ethylenically unsaturated monomers to be used as component (b) above in preparing the preformed stabilizer **2** include, for example, those ethylenically unsaturated monomers **3, 4** described earlier.

Suitable free radical polymerization initiators for use as component (c) in preparing the preformed stabilizer **2*,*** and suitable amounts, are described in in United States Patent Application Publication No. US 2017/0306076 A1 at [0120]-[0122], the cited portion of which being incorporated herein by reference.

Components (a), (b), and (c) of the pre-formed stabilizer **2** are soluble in (d) the polymer control agent. However, the resultant preformed stabilizer **2** is essentially insoluble in (d) the polymer control agent. Suitable compounds to be used as polymer control agents include various mono-ols (i.e. monohydroxy alcohols), aromatic hydrocarbons, ethers, and other liquids, such as those described in, for example, U.S. Pat. Nos. 3,953,393, 4,119,586, 4,463,107, 5,324,774, 5,814,699 and 6,624,209, the disclosures of which are herein incorporated by reference. Mixtures of two or more such compounds, such as two or mono-ols, may be used as polymer control agents. In some implementations, the mono-ol is an alcohol containing at least one carbon atom, such as methanol, ethanol, n-propanol, isopropanol, n-butanol, sec.-butanol, t-butanol, n-pentanol, 2-pentanol, 3-pentanol, or a mixture thereof. Other suitable polymer control agents include, for example, ethylbenzene and toluene.

Suitable compounds to be used as component (e) the diluent of the preformed stabilizer **2** are described in United States Patent Application Publication No. US 2017/0306076 A1 at [0126], the cited portion of which being incorporated herein by reference.

Suitable processes for preparing the preformed stabilizer **2** are described in in United States Patent Application Publication No. US 2017/0306076 A1 at [0130]-[0131], the cited portion of which being incorporated herein by reference.

Suitable free-radical initiators **1** include, for example, those described earlier with respect to preparing the preformed stabilizer **2.** Specific examples of suitable free-radical polymerization initiators **1** for preparing the PMPO include, without limitation, peroxides including both alkyl and aryl hydroperoxides, persulfates, peresters, perborates, percarbonates, and azo compounds. Some specific examples include hydrogen peroxide, di(t-butyl)-peroxide, t-butylperoxy diethyl acetate, t-butyl peroctoate, t-butyl peroxy isobutyrate, t-butyl peroxy 3,5,5-trimethyl hexanoate, t-butyl perbenzoate, t-butyl peroxypivalate, t-amyl peroxypivalate, t-butyl peroxy-2-ethyl hexanoate, lauroyl peroxide, cumene hydroperoxide, t-butyl hydroperoxide, azobis(isobutyronitrile), and 2,2'-azo bis-(2-methylbutyronitrile).

The free-radical initiator **1,** such as peroxide, can be used in essentially pure form, or may be diluted to lower concentration using an appropriate diluent, such as aliphatic or aromatic hydrocarbons, mono-ols, and polyether polyols. The quantity of free-radical initiator **1** used can vary, though, in some implementations, the amount is 0.01 to 2% by weight, based on the total weight of the final PMPO.

In some implementations, although not explicitly depicted in Fig. 1, the free-radical initiator **1** may be premixed by addition to the base polyol **5** and/or the preformed stabilizer **2** feed lines before entering the CSTR. Another option is for an independent free-radical initiator feed stream entering at the same point as other component streams or immediately thereafter prior to entering the CSTR. For instance, a free-radical initiator feed vessel can transport material to a header system capable of feeding the initiator to single and/or multiple reactors simultaneously. In another implementation, the initiator may be fed to single and/or multiple reactors via a recirculation line from an initiator feed vessel. The recirculation line carries initiator from and back to the initiator feed vessel, with independent initiator feed lines directed from the recirculation line to each reactor.

In addition, a chain transfer agent may be continuously introduced to the CSTR. Suitable chain transfer agents include, without limitation, mercaptans, such as dodecane thiol, ethane thiol, octane thiol, and toluene thiol; halogenated hydrocarbons, such as carbon tetrachloride, carbon tetrabromide, and chloroform; amines, such as diethylamine, enol-ethers, among others, including combination thereof. In some implementations, a chain transfer agent is used in an amount of 0.1 to 2% by weight, such as 0.2% to 1% by weight, based on the total weight of the PMPO (prior to stripping).

One aspect of the processes of this specification is that the PMPO is produced continuously. More specifically, as depicted by Fig. 1, continuous production of the PMPO is carried out using a CSTR **10** as the PMPO reactor, in which reaction mixture components, from sources **1** through **5*,*** are continuously introduced to CSTR **10** and PMPO is also continuously removed from CSTR **10** via line **60*.*** In the embodiment depicted in Fig. 1, PMPO that is continuously removed from CSTR **10** via line **60** is continuously introduced to secondary reactor **40** and then to work-up. The CSTR can be fitted with impeller(s) and baffles and can utilize a wide range of mixing conditions. Suitable impellers include axially and/or radially/tangentially acting impellers. According to implementations of the processes of this specification, the reaction mixture components are fed from feed source tanks through an in-line static mixer, and then through a feed tube into the CSTR, as shown in Fig. 1.

In some implementations, reactant feed stream temperatures to the CSTR are at or near ambient temperature (25°C), though, if desired, feed streams can be heated to above 25°C prior to mixing and entering the reactor. Other process conditions, which may be useful, include cooling of the feed tube in the reactor. Furthermore, suitable reaction conditions for preparing the PMPO are, in some cases, characterized by a reaction temperature 80 to 200°C and a pressure of 20 to 80 psig.

Thus, a suitable continuous process for making PMPO according to this specification comprises: (1) providing a heterogeneous mixture of the preformed stabilizer and, optionally, a chain transfer agent, in combination with a base polyol, a free radically polymerizable ethylenically unsaturated monomer, and a free radical polymerization initiator to the CSTR; (2) maintaining the mixture in the CSTR reactor at a temperature sufficient to initiate a free radical reaction, and under sufficient pressure to maintain only liquid phases in the reaction zone, for a period of time sufficient to react at least a major portion of the ethylenically unsaturated monomer to form a heterogeneous mixture containing the PMPO, unreacted monomers and chain transfer agent.

In addition, as shown in Fig. 1., the CSTR ***10*** has an external recirculation loop **50** comprising a pump **30** and a heat exchanger **20,** such as a shell and tube heat exchanger **20,** arranged in series with respect to each other, in which a stream of the reactor contents is (i) continuously removed from the CSTR **10,** (ii) then continuously flows through pump **30** and the heat exchanger **20,** and (iv) then continuously returns to the CSTR 10. In some implementations, the PMPO is passed through the tube side of shell and tube heat exchanger **20** and coolant liquid, such as water, is passed through the shell side of shell and tube heat exchanger **20*.*** In some cases, coolant liquid and PMPO pass through heat exchanger **20** counter-currently, such as is depicted in Fig. 1, while, in other cases, coolant liquid and PMPO pass through heat exchanger **20** co-currently.

Specifically, according to the processes of this specification, a ratio of reactor system residence time to recirculation loop residence time is 10 to 93 in which: (A) reactor system residence time = (Rᵥ+Lᵥ)/Rₜₕᵣᵤ; and (B) recirculation loop residence time = (Rᵥ+Lᵥ)/Lₚ, in which: (1) Rᵥ is the volume, in cubic meters, of the CSTR; (2) Lᵥ is the volume, in cubic meters, of the recirculation loop; (3) Rₜₕᵣᵤ is the reactor volumetric throughput in cubic meter per hour; and (4) Lₚ is the volumetric flow rate of reactor contents through the recirculation loop in cubic meters per hour. As will be appreciated, during operation of CSTR **10** to produce the PMPO, the reaction mixture components are fed to CSTR **10** at substantially the same rate at which PMPO is removed from CSTR **10** for further processing, such as by continuous introduction of the resulting PMPO to secondary reactor **40*,*** as shown in Fig. 1. The volumetric flow rate of this PMPO that is removed from CSTR **10** for such further processing is referred to herein as the "reactor volumetric throughput" or "Rₜₕᵣᵤ". At the same time that PMPO is continuously removed from CSTR **10** for further processing, PMPO also continuously flows through recirculation loop **50*,*** which includes heat exchanger **20*,*** to remove heat that is generated during the reaction occurring in CSTR **10*.*** The volumetric flow rate of PMPO through recirculation loop **50*,*** measured in cubic meters per hour, is Lₚ. In some cases, the ratio of reactor residence time to recirculation loop residence time is 20 to 93, 30 to 93, 40 to 93, 50 to 93, or, in some cases 55 to 93.

For instance, in some cases, the reactor system residence time may be 20 to 180 minutes, such as 30 to 90 minutes, 38 to 71 minutes, or 38 to 52 minutes. In some implementations, however, the recirculation loop residence time is 0.3 to 1.0 minutes or 0.4 to 0.6 minutes.

In fact, it was a surprising discovery that by maintaining a ratio of reactor system residence time to recirculation loop residence time within the ranges specified above, it was possible to reduce the fouling of heat exchanger **20** to an extent that significantly longer production campaigns are possible before PMPO production needs to be stopped in order to clean the production system, enabling a significant increase in the PMPO production unit's production capacity.

The continuously produced PMPO can then be treated in a single or multi staged stripping step to remove volatiles before entering a stage, which can essentially be any combination of filtration and/or product cooling, prior to proceeding to a PMPO storage tank.

Various aspects of the subject matter described herein are set out in the following numbered clauses:
Clause 1. A process for continuously producing a PMPO comprising free-radically polymerizing an ethylenically unsaturated monomer composition in the presence of a base polyol, wherein (a) the polymerizing occurs in a CSTR that has an external recirculation loop comprising a pump and a heat exchanger arranged in series with respect to each other, in which a stream of the reactor contents is (i) continuously removed from the reactor, (ii) then continuously flows through the pump and the heat exchanger, and (iii) then continuously returns to the CSTR, and (b) a ratio of reactor system residence time to recirculation loop residence time is 10 to 93 in which: (A) reactor system residence time = (Rᵥ + Lᵥ) / Rₜₕᵣᵤ; and (B) recirculation loop residence time = (Rᵥ + Lᵥ) / Lₚ, in which: (1) Rᵥ is the volume, in cubic meters, of the continuous stirred tank reactor; (2) Lᵥ is the volume, in cubic meters, of the recirculation loop; (3) Rₜₕᵣᵤ is the reactor volumetric throughput in cubic meter per hour; and (4) Lₚ is the volumetric flow rate of reactor contents through the recirculation loop in cubic meters per hour.
Clause 2. The process of clause 1, wherein the PMPO has a solids contentof 30% by weight to 75% by weight, 35% by weight to 70% by weight, 40% by weight to 60% by weight, or 41% by weight to 55% by weight, based on the total weight of the PMPO.
Clause 3. The process of clause 1 or clause 2, wherein the PMPO has a viscosity at 25°C of less than 10,000 mPas or less than 5,000 mPas.
Clause 4. The process of one of clause 1 to clause 3, wherein the base polyol comprises a polyether polyol having a functionality of 2 to 8, 2 to 6, or 3 to 5.
Clause 5. The process of one of clause 1 to clause 4, wherein the base polyol has an OH number of 20 to 400 mg KOH/g, 20 to 200 mg KOH/g, 20 to 150 mg KOH/g, 20 to 100 mg KOH/g, 20 to 50 mg KOH/g, 25 to 60 mg KOH/g, or 30 to 55 mg KOH/g.
Clause 6. The process of one of clause 1 to clause 5, wherein the base polyol comprises a polyoxyethylene glycol, a polyoxyethylene triol, a polyoxyethylene tetrol, a polyoxypropylene glycol, a polyoxypropylene triol, a polyoxypropylene tetrol, or a mixture of any two or more thereof.
Clause 7. The process of one of clause 1 to clause 6, wherein the ethylenically unsaturated monomer composition comprises an aliphatic conjugated diene, such as butadiene and isoprene; a monovinylidene aromatic monomer, such as styrene, α-methyl-styrene, (t-butyl)styrene, chlorostyrene, cyanostyrene and bromostyrene; an α,β-ethylenically unsaturated carboxylic acid or ester thereof, such as acrylic acid, methacrylic acid, methyl methacrylate, ethyl acrylate, 2-hydroxyethyl acrylate, butyl actylate, itaconic acid, and maleic anhydride; an α,β-ethylenically unsaturated nitrile or amide, such as acrylonitrile, methacrylonitrile, acrylamide, methacrylamide, N,N-dimethyl acrylamide; an N-(dimethylaminomethyl)-acrylamide; a vinyl ester, such as vinyl acetate; a vinyl ether; a vinyl ketone; vinyl halide; a vinylidene halide; or a mixture of any two or more thereof.
Clause 8. The process of clause 7, wherein the ethylenically unsaturated monomer composition comprises styrene and acrylonitrile, such as where the weight ratio of styrene to acrylonitrile (S:AN) is within the range of 90:10 to 10:90, 80:20 to 20:80 or 75:25 to 25:75.
Clause 9. The process of one of clause 1 to clause 8, wherein the polymerizing occurs in the presence of a preformed stabilizer, such as where the preformed stabilizer is a reaction product of a reaction mixture comprising: (a) a macromer that contains reactive unsaturation; (b) an ethylenically unsaturated monomer; (c) a free radical initiator; (d) a polymer control agent; and, optionally, (e) a diluent.
Clause 10. The process of clause 9, wherein the macromer that contains reactive unsaturation is a reaction product of a reaction mixture comprising: (i) a starter compound having a functionality of 2 to 8, and a hydroxyl number of 20 to 50; (ii) 0.1 to 3% by weight, based on 100% by weight of the sum of components (i), (ii) and (iii), of a hydroxyl-reactive compound that contains reactive unsaturation; and (iii) from 0 to 30% by weight, based on 100% by weight of the sum of components (i), (ii) and (iii), of a diisocyanate.
Clause 11. The process of clause 9 or clause 10, wherein the polymer control agent comprises a mono-ol, an aromatic hydrocarbon, an ether, or a mixture of any two or more thereof, such as where the polymer control agent comprises methanol, ethanol, n-propanol, isopropanol, n-butanol, sec.-butanol, t-butanol, n-pentanol, 2-pentanol, 3-pentanol, toluene, ethylbenzene or a mixture of any two or more thereof.
Clause 12. The process of one of clause 1 to clause 11, wherein the polymerizing occurs in the presence of a free-radical initiator, such as a peroxide (including both alkyl and aryl hydroperoxides), a persulfate, a perester, a perborate, a percarbonate, an azo compound, or a mixture of any two or more thereof, such as where the free-radical initiator comprises hydrogen peroxide, di(t-butyl)-peroxide, t-butylperoxy diethyl acetate, t-butyl peroctoate, t-butyl peroxy isobutyrate, t-butyl peroxy 3,5,5-trimethyl hexanoate, t-butyl perbenzoate, t-butyl peroxypivalate, t-amyl peroxypivalate, t-butyl peroxy-2-ethyl hexanoate, lauroyl peroxide, cumene hydroperoxide, t-butyl hydroperoxide, azobis(isobutyronitrile), 2,2'-azo bis-(2-methylbutyronitrile), or a mixture of any two or more thereof.
Clause 13. The process of clause 12, wherein the free-radical initiator is premixed by addition to the base polyol and/or the preformed stabilizer feed lines before entering the CSTR.
Clause 14. The process of one of clause 1 to clause 13, wherein the polymerizing occurs in the presence of a chain transfer agent, such as a mercaptan, such as dodecane thiol, ethane thiol, octane thiol, and toluene thiol; a halogenated hydrocarbon, such as carbon tetrachloride, carbon tetrabromide, and chloroform; an amine, such as diethylamine, an enol-ether, or a mixture of any two or more thereof, such as where the chain transfer agent is used in an amount of 0.1 to 2% by weight, such as 0.2% to 1% by weight, based on the total weight of the PMPO prior to stripping.
Clause 15. The process of one of clause 1 to clause 14, comprising: (1) providing a heterogeneous mixture of preformed stabilizer and, optionally, a chain transfer agent, in combination with the base polyol, the ethylenically unsaturated monomer composition, and a free radical polymerization initiator to the CSTR; and (2) maintaining the mixture in the CSTR reactor at a temperature sufficient to initiate a free radical reaction, and under sufficient pressure to maintain only liquid phases in the reaction zone, for a period of time sufficient to react at least a major portion of the ethylenically unsaturated monomer to form a heterogeneous mixture containing the polymer polyol, unreacted monomers and chain transfer agent.
Clause 16. The process of one of clause 1 to clause 15, wherein the ratio of reactor residence time to recirculation loop residence time is 20 to 93, 30 to 93, 40 to 93, 50 to 93, or 55 to 93.
Clause 17. The process of one of clause 1 to clause 16, wherein the reactor system residence time is 20 to 180 minutes, such as 30 to 90 minutes, 35 to 75 minutes, 38 to 71 minutes or 38 to 52 minutes.
Clause 18. The process of one of clause 1 to clause 17, wherein the recirculation loop residence time is 0.3 to 1.0 minutes or 0.4 to 0.6 minutes.

The non-limiting and non-exhaustive examples that follow are intended to further describe various non-limiting and non-exhaustive implementations without restricting the scope of the implementations described in this specification.

### EXAMPLES

Various PMPOs having solids contents of 41-51% by weight were produced in production campaigns at various reactor volumetric throughputs, each campaign being conducted using a system as generally depicted by Fig. 1. The PMPOs were produced using a pre-formed stabilizer process similar to that described in United States Patent Application Publication No. US 2017/0306076 A1. In these Examples, Reactor Systems A-C had CSTRs of varying volumes and external recirculation loops of varying volumes. In each case, heat exchanger **20** was a shell and tube heat exchanger. In Reactor System A, the polymer polyol passed through the tube side of heat exchanger **20** and cooling water flowed counter-concurrently on the shell side of the heat exchanger **20.** In Reactor Systems B and C, the polymer polyol passed through the tube side of heat exchanger **20** and cooling water flowed coconcurrently on the shell side of the heat exchanger **20*.***

The threshold for evaluating the fouling performance of the different reactor heat exchangers was if the difference between the reaction temperature (°C), i.e., the temperature of the polymer polyol in the CSTR **10,** and the temperature of the cooling water (°C) entering heat exchanger **20** increased by more than 30% in less than 50 days. If it took less than 50 days, then that means the reactor heat exchanger fouled more quickly. As is apparent from the data in Table 1, in each case where the ratio of reactor system residence time to recirculation loop residence time was below 93, the time the foregoing temperature difference exceeded 30°C was greater than (or expected to be greater than) 50 days.

**Table 1**

| Example Number | Reactor system | Campaign Average PMPO Solids (% by weight) | Reactor volumetric throughput (m³/hour) | Production Residence Time ("T1") | Recirculation Residence Time ("T2") | T1/T2 | Time to 30% increase in ΔT* (days) |
|---|---|---|---|---|---|---|---|
| 1* | A | 45.8% | 6.52 | 1.19 hour | 0.0103 hour | 116 | 22 |
| 2* | A | 46.0% | 6.52 | 1.19 hour | 0.0103 hour | 116 | 24 |
| 3 | A | 47.6% | 6.52 | 1.19 hour | 0.0137 hour | 87 | >49** |
| 4* | A | 45.8% | 8.38 | 0.98 hour | 0.0103 hour | 95 | 35 |
| 5 | B | 50.1% | 6.12 | 0.70 hour | 0.0077 hour | 91 | >50 |
| 6 | B | 48.5% | 6.73 | 0.64 hour | 0.0077 hour | 82 | >50 |
| 7 | B | 49.9% | 6.51 | 0.66 hour | 0.0077 hour | 85 | >50 |
| 8 | B | 47.6% | 6.42 | 0.67 hour | 0.0077 hour | 86 | >50 |
| 9 | C | 48.5% | 6.61 | 0.86 hour | 0.0095 hour | 91 | >50 |
| 10* | C | 48.2% | 6.84 | 0.83 hour | 0.0070 hour | 119 | 26 |
| 11* | C | 47.4% | 6.50 | 0.88 hour | 0.0070 hour | 126 | 30 |
| 12* | C | 48.9% | 6.72 | 0.85 hour | 0.0070 hour | 122 | 30 |
| 13* | C | 49.9% | 7.04 | 0.81 hour | 0.0070 hour | 116 | 40 |
| 14 | C | 48.7% | 6.81 | 0.84 hour | 0.0095 hour | 88 | >42** |
| 15 | C | 48.4% | 6.57 | 0.87 hour | 0.0095 hour | 91 | >50 |

| | | | | | | | |
|---|---|---|---|---|---|---|---|
| * - Denotes a comparative example ** Production was shut down before 50 days for reasons unrelated to heat exchanger performance. At that point, the ΔT increase was well below 30% and unlikely to reach 30% by 50 days. | | | | | | | |

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A process for continuously producing a polymer polyol (PMPO) comprising free-radically polymerizing an ethylenically unsaturated monomer composition in the presence of a base polyol, wherein
(a) the polymerizing occurs in a continuous stirred tank reactor (CSTR) that has an external recirculation loop comprising a pump and a heat exchanger arranged in series with respect to each other, in which a stream of the reactor contents is (i) continuously removed from the reactor, (ii) then continuously flows through the pump and the heat exchanger, and (iv) then continuously returns to the CSTR, and
(b) a ratio of reactor system residence time to recirculation loop residence time is 10 to 93 in which:
(A) reactor system residence time = (Rᵥ+Lᵥ)/Rₜₕᵣᵤ; and
(B) recirculation loop residence time = (Rᵥ+Lᵥ)/Lₚ, in which:
(1) Rᵥ is the volume, in cubic meters, of the continuous stirred tank reactor;
(2) Lᵥ is the volume, in cubic meters, of the recirculation loop;
(3) Rₜₕᵣᵤ is the reactor volumetric throughput in cubic meter per hour; and
(4) Lₚ is the volumetric flow rate of reactor contents through the recirculation loop in cubic meters per hour.

2. The process of claim 1, wherein the PMPO has a solids contentof 30% by weight to 75% by weight, 35% by weight to 70% by weight, 40% by weight to 60% by weight, or 41% by weight to 55% by weight, based on the total weight of the PMPO.

3. The process of claim 1 or claim 2, wherein the PMPO has a viscosity at 25°C of less than 10,000 mPas or less than 5,000 mPas.

4. The process of any of the preceding claims, wherein the base polyol comprises a polyether polyol having a functionality of 2 to 8, 2 to 6, or 3 to 5.

5. The process of any of the preceding claims, wherein the base polyol has an OH number of 20 to 400 mg KOH/g, 20 to 200 mg KOH/g, 20 to 150 mg KOH/g, 20 to 100 mg KOH/g, 20 to 50 mg KOH/g, 25 to 60 mg KOH/g, or 30 to 55 mg KOH/g.

6. The process of any of the preceding claims, wherein the ethylenically unsaturated monomer composition comprises styrene and acrylonitrile, such as where the weight ratio of styrene to acrylonitrile (S:AN) is within the range of 90:10 to 10:90, 80:20 to 20:80 or 75:25 to 25:75.

7. The process of any of the preceding claims, wherein the polymerizing occurs in the presence of a preformed stabilizer, such as where the preformed stabilizer is a reaction product of a reaction mixture comprising: (a) a macromer that contains reactive unsaturation; (b) an ethylenically unsaturated monomer; (c) a free radical initiator; (d) a polymer control agent; and, optionally, (e) a diluent.

8. The process of any of the preceding claims, wherein the polymerizing occurs in the presence of a free-radical initiator, such as a peroxide, a persulfate, a perester, a perborate, a percarbonate, an azo compound, or a mixture of any two or more thereof.

9. The process of claim 8, wherein the free-radical initiator is premixed by addition to the base polyol and/or the preformed stabilizer feed lines before entering the CSTR.

10. The process of any of the preceding claims, wherein the polymerizing occurs in the presence of a chain transfer agent, such as a mercaptan, such as dodecane thiol, ethane thiol, octane thiol, and toluene thiol; a halogenated hydrocarbon, such as carbon tetrachloride, carbon tetrabromide, and chloroform; an amine, such as diethylamine, an enol-ether, or a mixture of any two or more thereof.

11. The process of any of the preceding claims, comprising:
(1) providing a heterogeneous mixture of preformed stabilizer and, optionally, a chain transfer agent, in combination with the base polyol, the ethylenically unsaturated monomer composition, and a free radical polymerization initiator to the CSTR; and
(2) maintaining the mixture in the CSTR reactor at a temperature sufficient to initiate a free radical reaction, and under sufficient pressure to maintain only liquid phases in the reaction zone, for a period of time sufficient to react at least a major portion of the ethylenically unsaturated monomer to form a heterogeneous mixture containing the polymer polyol, unreacted monomers and chain transfer agent.

12. The process of any of the preceding claims, wherein the ratio of reactor residence time to recirculation loop residence time is 20 to 93, 30 to 93, 40 to 93, 50 to 93, or 55 to 93.

13. The process of any of the preceding claims, wherein the reactor system residence time is 20 to 180 minutes, 30 to 90 minutes, 35 to 75 minutes, 38 to 71 minutes, or 38 to 52 minutes.

14. The process of any of the preceding claims, wherein the recirculation loop residence time is 0.3 to 1.0 minutes or 0.4 to 0.6 minutes.
